# NEUE EUROPÄISCHE PATENTSCHRIFT

(11) **EP 2 655 994 B2**
(45) Veröffentlichungstag und Bekanntmachung des Hinweises auf die Entscheidung über den Einspruch: **30.11.2022**
(45) Hinweis auf die Patenterteilung: 08.04.2015
(21) Anmeldenummer: 11804663.0
(22) Anmeldetag: 13.12.2011
(51) Int. Cl.: F27B 7/38, F27D 15/02, C04B 7/47

(54) **VERFAHREN ZUM KÜHLEN VON HEIßEM SCHÜTTGUT UND KÜHLER**
METHOD FOR COOLING HOT BULK MATERIAL AND COOLER
PROCÉDÉ POUR REFROIDIR UN PRODUIT EN VRAC CHAUDE, ET REFROIDISSEUR

(30) Priorität: 23.12.2010 DE 102010055825
(43) Veröffentlichungstag der Anmeldung: 30.10.2013
(73) Patentinhaber: KHD Humboldt Wedag GmbH, 51067 Köln (DE)
(72) Erfinder: ELORANTA, Jarmo, 51069 Köln (DE); SYBON, André, 51105 Köln (DE); ZENKER, Klaus, 51427 Bergisch Gladbach (DE); OKKA, Hakan, 51103 Köln (DE); HÖHNE, Jörg, 47051 Duisburg (DE)
(74) Vertreter: Castell, Klaus
(86) Internationale Anmeldenummer: PCT/EP2011/072615
(87) Internationale Veröffentlichungsnummer: WO 2012/084608

(56) Entgegenhaltungen:
- EP-B1- 1 509 737
- DE-A-102006 037 764
- DE-A1- 10 017 324
- DE-A1-102006 023 677
- DE-A1-102010 055 825
- A New Arrival by M.Mersmann, World Cement July 2005
- 'Keil",- Definition-aus www.wikipedia.de
- Vefbindungstechnik" Definition aus www.wikipedia.de

## Beschreibung

Die Erfindung betrifft einen Kühler zum Kühlen von heißem Schüttgut, in welchem Kühlgas etwa quer zur Förderrichtung durch ein Schütgutbett fließt und dabei die Wärme des Schüttguts aufnimmt, wobei eine das Schüttgutbett tragende Vorrichtung einen Belüftungsboden aufweist, durch den Kühlgas fließt, und wobei das Förderprinzip sich in Förderrichtung erstreckende Planken vorsieht, bei welchen mindestens zwei benachbarte Planken gleichzeitig in Förderrichtung und ungleichzeitig entgegen der Förderrichtung bewegt werden.

Zur Herstellung von Zement wird Rohmehl, das aus kalkhaltigem Gestein und silikathaltigem Gestein besteht, zunächst durch eine erste Wärmebehandlung von chemisch gebundenem Kohlendioxid in Form des Carbonats befreit und anschließend wird das so calcinierte Rohmehl in einem Drehrohrofen bei Temperaturen bis 1.450 Grad Celsius gesintert. Dabei bilden sich in einer Festkörperreaktion verschiedene Phasen aus stöchiometrisch unterschiedlichen Calciumsilikaten und das in den Prozess eingegebene Rohmehl ändert seine Korngrößenverteilung, weil sich beim Sintern die Körner des Rohmehls miteinander verbinden. Die Körner des so gebildeten Klinkers weisen nach Passage des Drehrohrofens in der Regel die Größe von grobem Mehl bis hin zu faustgroßen Klinkergranalien auf. Die Kristallisation bei der Festkörperreaktion des Sinterns zur Bildung der erwünschten Phasen erfordert ein rasches Abschrecken des Klinkers nach dem Sinterprozess bei der Passage des Drehrohrofens. Daher wird der frisch gesinterte Klinker, der ein sehr abrasives und sehr heißes Material bildet, auf einen Klinkerkühler abgeworfen. In dem Klinkerkühler wird dem frischen Klinker rasch Wärme entzogen, um einerseits den Klinker abzuschrecken aber auch, um die in dem Klinker enthaltene Wärme dem sehr wärmeintensiven Prozess der Zementherstellung zurückzuführen.

Die Kühlung des Zementklinkers erfordert einigen verfahrenstechnischen Aufwand, weil der Klinker sehr heiß ist und auch, weil der Klinker sehr abrasiv wirkt.

Lange bekannte Verfahren zum Kühlen des Zementklinkers sehen vor, den Zementklinker aus dem Drehrohrofen auf einen Treppenrost abzuwerfen, wo der zu kühlende Zementklinker ein Schüttgutbett ausbildet. Der Treppenrost ist ein statischer Rost auf dem sich eine statische Passivschicht aus Zementklinker ausbildet. Diese Passivschicht schützt den statischen Rost vor Überhitzung und Abrasion. Der vom Drehrohrofen kommende Klinker fällt auf diese Passivschicht und rutscht über den sich bildenden natürlichen Böschungswinkel in Förderrichtung auf einen sich bewegenden Förderrost. Beim Transport über den Treppenrost wird der Zementklinker durch Kühlluft gekühlt, die von unten durch den Förderrost geleitet wird. An den Treppenrost schließt sich ein bewegter Förderrost, mit alternierend sich in Förderrichtung bewegenden Rostbalken mit Rostplatten an. Dieser fördert den Klinker in Richtung Kühlerende, wobei die Kühlluft durch die beweglichen sowie durch die feststehenden Rostbalken mit Rostplatten hindurch oder durch zwischen den beweglichen Rostbahnen mit Rostplatten vorhandene Zwischenräume in das Kühlgut fließt. Diese bekannte Art von Klinkerkühlern hat sich in der Praxis bewährt. Nachteilig an diesen Klinkerkühlern ist aber die hohe Verschleißrate, da der abrasive und auch sehr heiße Klinker in die Zwischenräume zwischen den Stufen gelangt. Daher ist ein Kühler dieses Typs im Vergleich zu moderneren Klinkerkühlern wartungsintensiv.

Andere Konzepte zum Fördern des Kühlers, offenbart in DE2831473A1, umfassen das Ziehen des Klinkers über eine stationäre, belüftete Fläche mit einer Schleppkette. Auch dieser Kühlertyp ist empfindlich gegenüber starkem Verschleiß, weil die Schleppkette mit ihren Beweglichen Gliedern in dem heißen Zementklinker abgetragen wird.

Noch ein anderes Konzept, das in der EP1373818B1 offenbart ist, verfolgt die Bewegung einer den gesamten Kühler ausfüllenden Ebene nach vorn in einem ersten Takt, das Absenken einer Stauplatte in der Nähe des Drehrohrofens am Anfang des Klinkerkühlers in einem zweiten Takt und das Zurückziehen der gesamten Ebene gegen die stauende Wirkung der Stauplatte, so dass der Kühler beim Zurückziehen der Ebene dieser gegenüber nach vorne geschoben wird. Vorteilhaft an diesem Kühlertyp ist, dass sich keine relativ zueinander bewegenden Maschinenteile in unmittelbarem Kontakt mit dem heißen abrasiven Klinker befinden. Allerdings sind bei diesem Kühlertyp sehr hohe Kräfte für die Bewegung der Ebene gegen die Wirkung der Stauplatte anzuwenden und das Schüttgutbett neigt dazu, sich an der Stauplatte anzuhäufen, so dass sich ein gleichmäßiger Transport mit gleichmäßiger und wiederholbarer Schüttgutbetthöhe und damit reproduzierbaren Eigenschaften der Klinkerkühlung nicht stets erzielen lässt. In dieser hier erwähnten Druckschrift wird auch offenbart, dass es vorteilhaft sei, die Ebene so langsam zu bewegen, dass das Schüttgutbett keine vertikale Durchmischungsbewegung durchführe. Dadurch würde die Abrasion vermindert.

In dem Artikel "Sind Kühlroste Klinkerkühler oder Wärmerekuperatoren?" der Zeitschrift Zement-Kalk-Gips, 37. Jahrgang, Nr. 5/1984 werden theoretische Überlegungen der Klinkerkühlung erläutert. Dabei wird auf ein Kreuzstrommodell abgestellt, das besagt, dass der Klinker in Transportrichtung fließt und dabei senkrecht zur Transportrichtung von Kühlluft durchströmt wird. Die dem Artikel zu Grunde liegende Überlegung ist, dass sich dabei ein im Schüttgutbett liegender Keil einer thermischen Zone ausbildet, wobei der breite Teil des Keils am Kühleranfang angeordnet ist und der flache Teil des Keils am Kühlerende. Dieser thermische Keil bildet sich nach der gängigen Vorstellung deshalb aus, weil die Kühlluft den heißen Klinker von unten nach oben durchdringt. Ist der Klinker in der gesamten Schichtdicke noch heiß, so erwärmt sich die von unten in den Klinker eintretende Kühlluft bereits nach einem kurzen Weg durch die Klinkerschicht, wobei die untere Klinkerschicht gekühlt zurück gelassen wird und der obere, wesentlich breitere Teil der Schüttgutbettschicht noch heiß ist. Da sich der Klinker fortbewegt, findet dieser Prozess in Förderrichtung erneut statt. Hier durchdringt die kalte Kühlluft die bereits kalte Schüttgutbettschicht, dann die noch heiße untere Schicht, die abgekühlt wird und damit die Breite der heißen Schicht verringert. Dieser Prozess findet solange statt, bis die gesamte Schichtdicke der Schüttgutbettschicht des Klinkers abgekühlt ist. Der erwünschte Effekt dieser allmählichen Abkühlung ist, dass die Kühlluft die oberste Schüttgutbettschicht mit einer möglichst hohen Temperatur verlässt. Dadurch wird mit wenig Kühllufteinsatz der Klinker gekühlt und allem voran, die Wärme mit hoher Temperatur zurück in den Prozess transportiert. Nach gängigen Vorstellungen ist also ein Schüttgutbett mit geringer Mischbewegung, vor allem wenig Mischbewegung von unten nach oben, vorteilhaft. Denn die gängige Kreuzstromkühlertheorie besagt auch, dass ein sich stark bewegendes Schüttgutbett zur Folge haben könnte, dass ein bereits abgekühltes Korn in den noch heißen Bereich gelangen könnte und erneut durch die noch heiße Schicht erwärmt wird. Dadurch würde die Temperatur der obersten Schicht verringert, weil sich die thermische Energie auf ein größeres Volumen des zu kühlenden Schüttguts verteilt. In Folge davon würde die Kühllufttemperatur beim Austritt aus der Klinkerkühlerschicht verringert und die Effizienz der Kühlung würde so ebenso verringert.

Aus dieser Überlegung heraus wurde ein weiterer Kühlertyp entwickelt, der in der dänischen Patentanmeldung DK 140399 erwähnt wird. Bei diesem Kühlertyp wird der Boden des Kühlers, der aus sich in Förderrichtung erstreckenden Planken besteht, in einem ersten Takt in seiner Gesamtheit in Förderrichtung bewegt und anschließend werden in weiteren Takten die einzelnen Planken einzeln unter dem zu kühlenden Schüttgut entgegen der Förderrichtung zurück gezogen. Weil das Schüttgutbett auf den anderen, ruhenden Planken liegt, wird das Schüttgutbett über der sich zurück bewegenden Planke festgehalten. Durch die sich bewegenden Planken wird Kühlluft geblasen, so dass der erwünschte Kühleffekt eintritt. Nach ersten Erfahrungen mit diesem Kühlertyp hat sich herausgestellt, dass über den Grenzlinien zwischen zwei Planken das Schüttgutbett bei der relativen Bewegung der Planken gegeneinander gelockert wird. Dadurch bilden sich Kanäle mit geringem Strömungswiderstand, so dass Kühlluft bevorzugt durch diese Grenzlinienauflockerungen fließt, ohne das zu kühlende Schüttgut zu kühlen. Dies bedeutet, dass dadurch die Rekuperationseffizienz des Kühlers verringert wird, und die Temperatur der das zu kühlende Schüttgutbett verlassenden Luft wird durch die ohne Kühleffekt durch das Schüttgutbett strömende Luft ebenso verringert. In der DK 140399 wird deshalb vorgeschlagen, auf den sich bewegenden Planken Strömungshindernisse anzubringen, wodurch die Planken in einzelne Abschnitte unterteilt werden. Die Vorstellung nach der DK 140399 ist, dass sich das Schüttgutbett beim individuellen Zurückziehen der einzelnen Planken über die Strömungshindernisse hinweg rollt, so dass die Auflockerungen über den Grenzlinien zwischen den Planken, die als Kaltkanäle bezeichnet werden, schließen.

Weitere Erfahrungen mit diesem Kühlertyp haben ergeben, dass sich bei der Lehre nach der DK 140399, die Abschnitte zwischen den Strömungshindernissen mit einer Klinkerschicht füllen, die mit der Planke hin- und her reisen. Der nach diesem Förderprinzip eintretende Effekt tritt erst in einer Schüttgutbetthöhe in Höhe der oberen Grenze der Strömungshindernisse auf. Auf diese Weise bildet sich auf den Planken dieses Kühlertyps eine Art autogener Verschleißschutz, der zwar vorteilhaft für den Einsatz dieses Kühlertyps ist, weil die Einzelteile dieses Kühlertyps nicht mit der schleißenden und heißen Klinkerschicht in Berührung kommen. Die Ausbildung von Kaltkanälen wird dadurch aber nicht wünschenswerter Weise verringert.

Eine weitere Ausgestaltung dieses Kühlertyps wird in der EP1509737B1 offenbart. Hier wird herausgestellt, dass der Kühler so betrieben werden solle, dass es an vertikaler Durchmischung im Schüttgutbett fehlen solle und die Höhe des Klinkerbetts eine bestimmte Höhe im Verhältnis zur Breite der einzelnen Planken sein solle. Es wird dadurch erwartet, dass sich die Transporteffizienz und auch die Effizienz der Wärmerückgewinnung dadurch positiv beeinflussen lassen würden.

Parallel zu den zuletzt erwähnten Kühlertypen wurden weitere Typen eines Klinkerkühlers entwickelt, die als sogenannte CrossBar-Kühler den Eingang in die Technik der Klinkerkühlung gefunden haben. Bei diesen Typen werden einzelne Mitnehmer, die aus einem kühlluftdurchströmten Tragrost herausragen, vor und zurückbewegt. Dieser Kühlertyp ist beispielsweise in der EP1272803B2 beschrieben. Typisch für diesen Kühlertyp sind keilförmige Mitnehmer, die mit ihrer nahezu senkrechten Seite in Transportrichtung weisen und mit ihrer abgeflachten Keilseite entgegen der Transportrichtung weisen. Die Transportmechanik beruht darauf, dass das oben beschriebene Prinzip der gemeinsamen Vorwärtsbewegung in Transportrichtung und der individuellen Rückwärtsbewegung angewandt wird. Durch die Keilform soll erreicht werden, dass sich das Schüttgutbett bei der Rückwärtsbewegung der einzelnen Mitnehmer, die sich relativ zu dem belüfteten Tragrost bewegen, über den Mitnehmer hinweg bewegt, hingegen bei der Bewegung in Förderrichtung durch die nahezu senkrechte Seite in Förderrichtung geschoben wird.

Trotz der durch die sich relativ zu dem Tragrost bewegenden und durch das Schüttgutbett durchpflügenden Mitnehmer erzeugten Durchmischung des Schüttgutbetts werden mit diesen Kühlertypen zufriedenstellende Rekuperationsraten erzielt. Nachteilig an diesem Kühlertyp ist die starke Schleißbeanspruchung der Mitnehmer.

Aufgabe der Erfindung ist es, einen Kühler zur Verfügung zu stellen, der die Vorteile der bekannten Kühlertypen in sich vereint und bei dem die Nachteile der bekannten Kühlertypen vermieden werden.

Die erfindungsgemäße Aufgabe wird dadurch gelöst, dass die Planken in Förderrichtung verschieden ausgestaltete Oberflächen aufweisen, auf denen das Schüttgutbett liegt, welche aufgrund ihres unterschiedlichen Reibschlusses mit dem darauf liegenden Schüttgutbett zu voneinander verschiedenen, mittleren Transportgeschwindigkeiten führen, so dass dadurch das Schüttgutbett im Bereich der schnelleren Förderung gestreckt und im Bereich der langsameren Förderung gestaucht wird, **wobei eine erste Ausgestaltung der Oberflächen eben ist, und eine zweite Ausgestaltung der Oberflächen ein Tragrost ist, welches einander überlappende Profile aufweist, zwischen denen Kühlgas in das Schüttgutbett fließt.** Weitere vorteilhafte Ausgestaltungen der Erfindung sind in den Unteransprüchen angegeben. Eine dazu verfahrensgemäße Lösung wird in Anspruch 7 bis 9 angegeben.

Erfindungsgemäß wird ein Förderprinzip verwendet, bei welchem mindestens zwei benachbarte Planken gleichzeitig in Förderrichtung und ungleichzeitig entgegen der Förderrichtung bewegt werden. Die Nachteile dieses Förderprinzipes, nämlich die unerwünschte Auflockerung des Schüttgutbettes über der sich in Förderrichtung erstreckenden Grenzlinie zwischen den sich relativ zueinander in und gegen die Förderrichtung bewegenden Planken wird dadurch vermieden, dass beim abwechselnden Strecken und Stauchen der Schüttgutbettschicht diese Auflockerung beim Strecken durch von der Seite nachfließendes Schüttgut geschlossen wird und beim Stauchen durch Verdichtung der Schüttung geschlossen wird. Im Gegensatz zum Einbringen von einfachen Strömungshindernissen, die statt zu einer transversalwellenartigen Bewegung zu einer Ausbildung einer sich mit den Planken mit bewegenden Schüttgutbettschicht führt, kann gemäß der Erfindung sich diese sich mit bewegende Schicht gar nicht bilden und trotzdem wird die Ausbildung von Kaltkanälen verhindert. Die Erfindung hat noch einen weiteren Vorteil. Die fortwährende, abwechselnde Streckung und Stauchung führt wie eine Walkbewegung zu einer deutlichen vertikalen Durchmischung des Schüttgutbettes, ohne dass in das Schüttgutbett hineinragende Strömungshindernisse vorhanden sind. Obwohl die gängige Vorstellung ist, dass gerade die Abwesenheit einer vertikalen Mischungsbewegung zu einer besonders guten Rekuperationsrate führt, weil sich dadurch der oben beschriebene thermische Keil ausbildet, ist in überraschender Weise festgestellt worden, dass die Temperatur der mit dem erfindungsgemäßen Kühler und dem dazu korrespondierendem Verfahren erzeugten Abluft heißer ist, als es im Stand der Technik ohne verschieden ausgebildete Oberflächen der Fall ist. Ein weiterer überraschender Effekt ist, dass die den Kühler verlassenden Klinkerkörner und -granalien, besonders größere Klinkerstücke, in weit seltenerem Maße noch glühende Bereiche aufweisen. Bei herkömmlichen Kühlern ist nämlich zu beobachten, dass mit einer typischen Konzentration das den Kühler verlassende Schüttgut, das in der Regel durch einen Brecher zerkleinert wird, einzelne, noch rot glühende Klinkerstücke aufweist. Beobachtet man das den Brecher am Ende des Kühlers angeordnete Transportband, das den frisch gebrochenen Klinker in ein Silo transportiert, so fallen je nach Güte des Klinkerkühlers einzelne noch rot glühende Klinkerstücke auf. Diese nehmen unerwünscht viel Wärme mit in das Klinkersilo, die nicht rekuperiert wird und das Silo unnötig mit Wärme belastet.

Es wird im Rahmen dieser Erfindung vermutet, dass das gängige Modell der Kreuzstromkühlung dann angemessen die Zustände in der Schüttgutbettschicht beschreibt, wenn das Schüttgutbett ideal ausgebildet ist. Das bedeutet, es verhält sich wie ein fluidisiertes, aber dennoch mischungsbewegungsfreies Schüttgutbett. Denn dann kann die das Schüttgutbett durchströmende Kühlluft jeden Partikel vollkommen und von allen Seiten kühlen. Der gesinterte Klinker hat jedoch Materialeigenschaften in Bezug auf Wärmeleitung wie die mancher Keramiken, bei der ein glühender Bereich in unmittelbarer Nähe zu einem sehr wesentlich kälteren Bereich vorliegen kann. So kann ein faustgroßes Klinkerstück auf einer Seite noch glühen und auf einer gegenüberliegenden Seite eine Temperatur von 60°C bis 80°C aufweisen. Auch können sich innerhalb größerer Klinkerstücke heiße Granalienkerne halten, die erst beim Brechen freigelegt werden. Mutmaßlich können sich diese heißen Flecken an den Klinkergranalien dann bilden, wenn aufgrund der ausbleibenden Mischbewegung die Klinkergranalie teilweise im Windschatten von benachbarten Klinkerkörnern liegt. Obwohl die gängige Theorie zur Kreuzstromkühlung vermuten lässt, dass eine Mischbewegung zu einer schlechteren Wärmerekuperation führt, ist mutmaßlich gerade die Mischbewegung ursächlich für eine bessere Rekuperation, weil Windschatten durch die Bewegung des Schüttgutbettes beim abwechselnden Strecken und Stauchen des Schüttgutbettes durch aktive Vermischung vermieden werden.

Eine einfache Ausgestaltung der Erfindung sieht vor, dass die Planken des Klinkerkühlers eine das Schüttgutbett tragende Vorrichtung mit einem Belüftungsboden aufweist, wobei die Planke in Förderrichtung unterschiedlich gestaltete Oberflächen aufweist. Die sich von den Tragrosten als das Schüttgutbett tragende Vorrichtung unterscheidende Oberfläche ist eine schlichte, glatte Oberfläche mit sehr geringem Reibschluss. Bei der gemeinsamen Vorwärtsbewegung kommt der unterschiedliche Reibschluss der Oberflächen nicht beobachtbar zur Wirkung, jedoch beim Rückhub macht sich die unterschiedliche Oberflächenbeschaffung in der Länge der Planken in Förderrichtung bemerkbar. In der Idealvorstellung wird das Schüttgutbett in dem Bereich, in dem sich eine Planke einzeln unter dem Schüttgutbett zurück bewegt, von den benachbarten Schüttgutstreifen, der auf einer sich augenblicklich nicht bewegenden Planke liegt, festgehalten, so dass trotz Rückbewegung der Planke, der darauf liegende Schüttgutbettstreifen in seiner Position verharrt. Im tatsächlichen Betrieb jedoch zeigt sich die Auflockerung der Bereiche über den Grenzlinien zwischen den Planken, was darauf zurückzuführen ist, dass der Schüttgutbettstreifen über der sich zurück bewegenden Planke mit einer gewissen, nicht vernachlässigbaren Kraft zurück gezogen wird, wodurch die Auflockerung entsteht. In Bereichen der Planke, in denen der Reibschluss sehr gering ist, ist daher die Auflockerung weniger stark ausgeprägt, und in den Bereichen, in denen ein Tragrost als das Schüttgutbett tragende Oberfläche vorliegt, ist die Auflockerung stark ausgeprägt. Dadurch wird der Schüttgutbettstreifen an den Stellen mit geringem Reibschluss durch die rücktreibende Kraft der Schüttgutbettstreifen komprimiert oder gestaucht Ähnlich verhält es sich, wenn ein zum Plankenteil mit Oberflächen geringem Reibschlusses mit einem Plankenteil mit hohem Reibschluss benachbart ist und sich der benachbarte Teil zurück bewegt. Aufgrund der hohen Reibung der Schüttgutbettstreifen über den einzelnen Planken zieht der Schüttgutbettstreifen über der sich zurück bewegenden Planke den Schüttgutbettstreifenanteil über der Oberfläche mit geringem Reibschluss mit sich nach hinten und verdichtet dort die Schüttung zum rückwärtigen Teil und lockert die Schüttung zum Vorwärts gerichteten Teil. Somit findet Verdichtung und Auflockerung in jedem Takt der Kühlerbewegung statt, wodurch eine Walkbewegung mit vertikaler Durchmischung und Verschluss der Kaltkanäle über den Grenzlinien zwischen den sich relativ zueinander bewegenden Planken entsteht.

Den ersten Oberflächen mit besonders geringem Reibschluss stehen solche zweiten Oberflächen gegenüber, welche in bevorzugter Weise als Tragrost einander überlappende Profile aufweisen, zwischen denen das Kühlgas in das Schüttgutbett fließt.

In besonderer Ausgestaltung der Erfindung ist vorgesehen, dass eine Ausgestaltung der Oberflächen eine Keilform aufweist, deren flaches Ende entgegen der Förderrichtung ausgerichtet ist. Im Unterschied zu den CrossBar-Kühlern, bei denen sich die Keile relativ zur Oberfläche des Tragrostes bewegen und somit Schuborgane darstellen, ist hier vorgesehen, dass sich die Keile fest auf dem sich bewegenden Tragrost befinden. Durch die Art der beschriebenen Vorwärtsbewegung muss das Schüttgut über den Keil wandern und fällt am Ende des Keils in Förderrichtung von der nahezu senkrechten Seite des Keils herunter. Dabei wird neben dem Schluss der Kaltkanäle die vertikale Durchmischung noch gefördert. Im Gegensatz zur Lehre nach der DK 140399 sind hier nicht einfache Strömungshindernisse vorgesehen, sondern Keile mit besonders geringem Reibschluss. Zwischen den Keilen bildet sich somit nicht eine erhöhte autogene Verschleißschutzschicht, wie das bei den Strömungshindernissen nach der DK 140399 der Fall ist, und die Keile bewirken neben dem vertikalen Umwälzen auch noch den Verschluss der Kaltkanäle.

Eine noch weitere, den Umwälzeffekte verstärkende Variante der Erfindung sieht vor, dass eine Ausgestaltung der Oberflächen eine Keilform aufweist, welche zur Seite geneigt ist und deren flaches Ende entgegen der Förderrichtung ausgerichtet ist. Diese Oberflächengestaltung hat einen Aufbau wie ein auf dem Rücken liegender Pflug, dessen Pflugschar nach oben weist. Die Keile mit Neigung zur Seite schieben sich bei einer Rückwärtsbewegung unter das sich in diesem Takt an dieser Stelle verdichtende Schüttgutbett, wobei dieses zur abfallenden Seite des Kühlers rutscht. Damit wird der zur abfallenden Seite liegende Schüttgutbettteil des Schüttgutbetts verdichtet, die Grenzlinie wird zugeschüttet und das Schüttgutbett erfährt eine Rotationsbewegung um eine sich in Förderrichtung erstreckende Achse. Das Schüttgutbett bewegt sich in einer Art Schraubenlinie vom Drehrohrofen zum Kühlerende, wobei eine Schraubenlinie pro Planke existiert. Diese hier zuletzt angegebene Ausführungsform führt zu sehr heftiger Walkbewegung und vertikaler Durchmischung, freilich auf Kosten eines erhöhten Transportwiderstands, der mit höherer hydraulischer Kraft in das Schüttgutbett eingebracht werden muss. Der Kostennachteil des erhöhten hydraulischen Energieeinsatzes wird durch die bessere Wärmerekuperation mehr als aufgewogen.

Um die Pflug- und Grenzlinienschlusswirkung noch zu verbessern, ist vorgesehen, die verschiedenen Oberflächen in sich regelmäßig wiederholenden Mustern auf der Schüttguttransportfläche des Kühlers anzuordnen. Ein Muster, welches den Pflug- und Grenzlinienschlusseffekt verbessert hat, ist ein Muster aus zur Förderrichtung schräg angeordneten Linien. Diese können in einem ersten Fall alle gleichgerichtet sein, wodurch ein einseitiges Abwurfverhalten des Drehrohrofens ausgeglichen werden kann. Drehrohröfen neigen zu einer Auftrennung unterschiedlich großer Klinkerkornfraktionen, wobei die feinen und die groben Klinkerkörner nebeneinander abgeworfen werden. Andere Drehrohröfen wiederum werfen den gebrannten Klinker nicht mittig, sondern seitlich versetzt ab.

Um die Pflugwirkung zu verstärken, ohne einen Nettotransport des Schüttgutbetts zur einen oder anderen Seite des Klinkerkühlers zu erzeugen, ist vorgesehen, dass die zur Förderrichtung angewinkelten Linien der Anordnung der Oberflächen mit geringem Reibschluss in ihrer Richtung abwechseln, also mal nach links und mal nach rechts zeigen.

In besonderer Ausgestaltung der Erfindung ist vorgesehen, dass die Anordnung der Oberflächen geringen Reibschlusses eine Bogenform aufweist, wobei der Bogen symmetrisch zur Förderrichtung ausgerichtet ist. Diese Bogenform hat als Wirkung eine Verdichtung des Bettes in Richtung der Mitte des Klinkerkühlers, je nach Wahl der Oberflächenform der Oberfläche mit geringem Reibschluss. Wird die in der Transportebene des Klinkerkühlers ebene Oberfläche gewählt, setzt sich die Walkbewegung in Bogenform fort. Wird hingegen die Keilform, die zur Seite abfällt, genutzt, wird je nach Seitenausrichtung der Keilform die Förderwirkung zur Mitte hin verstärkt oder abgeschwächt.

In ganz besonderer Ausgestaltung können die Oberflächen auch gemischt werden. Werden an den Seiten beispielsweise die keilförmigen glatten Oberflächen eingesetzt und in der Mittellinie der Förderrichtung die ebenen Oberflächen glatten Reibschlusses eingesetzt, so ist die Transporteffizienz zwischen Seitenwand und Mittellinie unterschiedlich bei gleichem Hub und gleicher Hubfrequenz der einzelnen Planken ausgeprägt, und die unterschiedliche Transporteffizienz kann dazu genutzt werden, ein nicht gleichmäßiges Abwurfverhalten des Drehrohrofens auszugleichen.

Die Erfindung wird anhand der folgenden Figuren näher erläutert. Es zeigt:
- Figur 1: einen erfindungsgemäßen Kühler in einer ersten Ausgestaltung mit ebenen Oberflächen mit geringem Reibschluss,
- Figur 2: eine Detailvergrößerung der ebenen Oberflächenanteile,
- Figur 3: verschiedene Belegungspläne für die verschiedenen Oberflächen,
- Figur 4: eine weitere Ausgestaltung des Kühlers mit keilförmigen Oberflächenbestandteilen geringen Reibschlusses,
- Figur 5.1: eine Detailvergrößerung der keilförmigen Oberflächenanteile,
- Figur 5.2: eine Seitenansicht auf die keilförmigen Oberflächenanteile in der Kühlertransportebene,
- Figur 6: eine dritte Ausgestaltung des Kühlers mit keilförmigen Oberflächenanteilen, die zur Seite abfallen,
- Figur 7: eine Frontansicht auf die keilförmigen Oberflächenanteile, die zur Seite abfallen in der Kühlertransportebene,

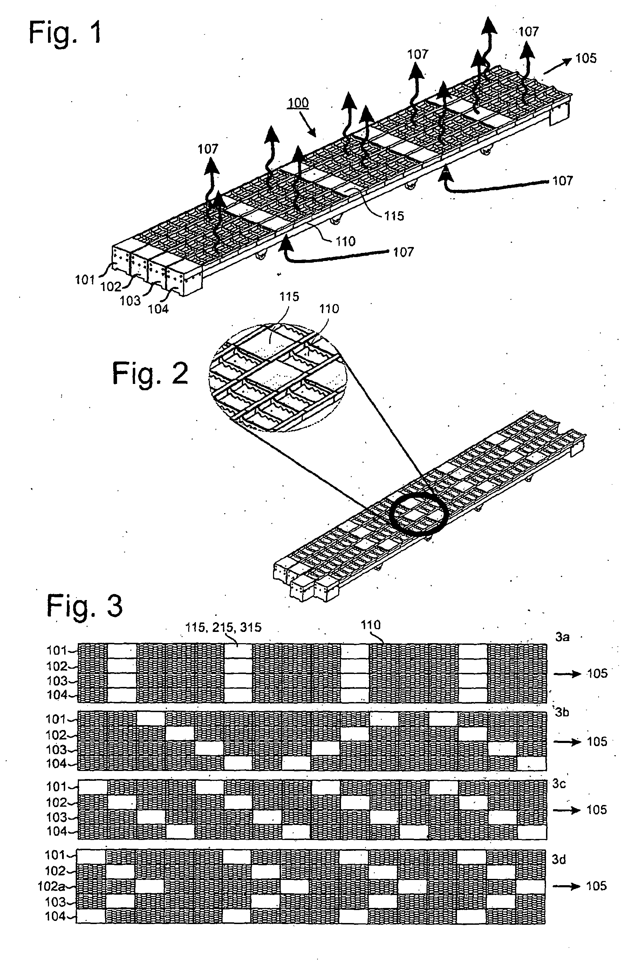

In Figur 1 sind die erfindungswesentlichen Bestandteile eines Klinkerkühlers 100 in einer ersten Ausgestaltung abgebildet. Dieser besteht aus vier nebeneinander angeordneten Planken 101, 102, 103 und 104, die sich in Förderrichtung 105 erstrecken. Die im Vordergrund abgebildete Querseite ist die Seite, auf die der Drehrohrofen den Klinker abwirft und die im Bildhintergrund abgebildete Querseite bildet das Kühlerende. Zum Kühlen des Klinkers wird der Klinker auf die vordere Site des Klinkerkühlers 100 abgeworfen, dabei von Kühlluft 107 durchströmt, die von unten durch die kassetenförmigen Einsätze 110 in das auf dem Kühler 100 liegende Schüttgutbett, das hier nicht eingezeichnet ist, strömt. Die kassetenförmigen Einsätze weisen einander überlappende Profile auf, durch welche die Kühlluft 107 strömt, aber von oben der Klinker nicht hindurch fallen kann. Mit den kassettenförmigen Einsätzen 110 wechseln sich glatte Oberflächenstrukturen mit zweiten Einsätzen 115 ab. Diese Einsätze 115 können auch mit Kühlluftöffnungen versehen sein. Wichtig ist, dass der Reibschluss der Oberflächen der zweiten Einsätze 115 mit glatter Oberfläche sich deutlich vom Reibschluss der kassettenförmigen Einsätze 110 unterscheidet, denn erst durch den unterschiedlichen Reibschluss entlang der Transportoberfläche des Kühlers 100 wirkt die oben beschriebene verdichtende und wieder auflockernde Wirkung, wodurch eine Walkbewegung des Schüttgutbetts erzeugt wird, die zu einer vertikalen Durchmischung führt und welche die Grenzlinien über den nebeneinander angeordneten Planken regelmäßig schließt, wenn diese bei der Relativbewegung zweier Planken 101, 102, 103 und 104 aufgerissen wird.

Die Einsätze 115 mit geringem Reibschluss sind in der Detailvergrößerung in Figur 2 dargestellt. Diese ersetzen in regelmäßigen Abständen die kassettenförmigen Einsätze 110, so dass sich an den Stellen im Schüttgutbettstreifen über den Planken 101, 102, 103 und 104 eine abwechselnd verdichtende und wieder auflockernde Wirkung einstellt, wo die zweiten Einsätze 115 angeordnet sind.

Neben der Form der Oberflächengestaltung der Einsätze 115 ist auch deren Anordnung in der Kühlertransportebene ursächlich für die Wirkung der verschiedenen Oberflächengestaltungen. Die einfachste Art der Anordnung ist wie in der Unterabbildung 3a ein regelmäßiger Wechsel von kassettenförmigen Einsätzen 110 mit einander überlappenden Profilen, die etwas tiefer gelegt sind, um in der Vertiefung eine Mulde für eine autogene Verschleißschutzschicht zu bilden und zweiten Einsätzen mit einer nahezu ebenen Oberfläche. Diese Anordnung führt zu einer sehr fast peristaltischen Walkbewegung des Schüttguts in den Schüttgutbettstreifen, die über den einzelnen Planken 101, 102, 103 und 104 liegen.

Neben dem regelmäßigen Wechsel über die gesamte Breite des Kühlers ist es auch möglich, die zweiten Oberflächen 115 mit geringem Reibschlüss gemäß Unterfigur 3b schräg zur Kühlertransportrichtung 105 anzuordnen. Um einen Nettofördereffekt zur Seite des Kühlers zu vermeiden, ist es möglich, die schräge Anordnung regelmäßig zu wechseln, so dass die Walkbewegung mal zur einen Seite und mal zur anderen Seite des Kühlers 100 wirkt.

In Unterabbildung 3c) ist schließlich eine Anordnung gezeigt, die einen Nettofördereffekt zur Seite zeigt, wenn die Walkbewegung nicht wie in Unterabbildung 3a) gezeigt, symmetrisch, sondern dissymmetrisch über die Kühlertransportfläche verteilt ist.

In Unterfigur 3d ist schließlich eine bogenförmige Anordnung der zweiten Oberflächen 115 dargestellt, wobei die Bögen symmetrisch um die Mittellinie der Förderrichtung 105 angeordnet sind.

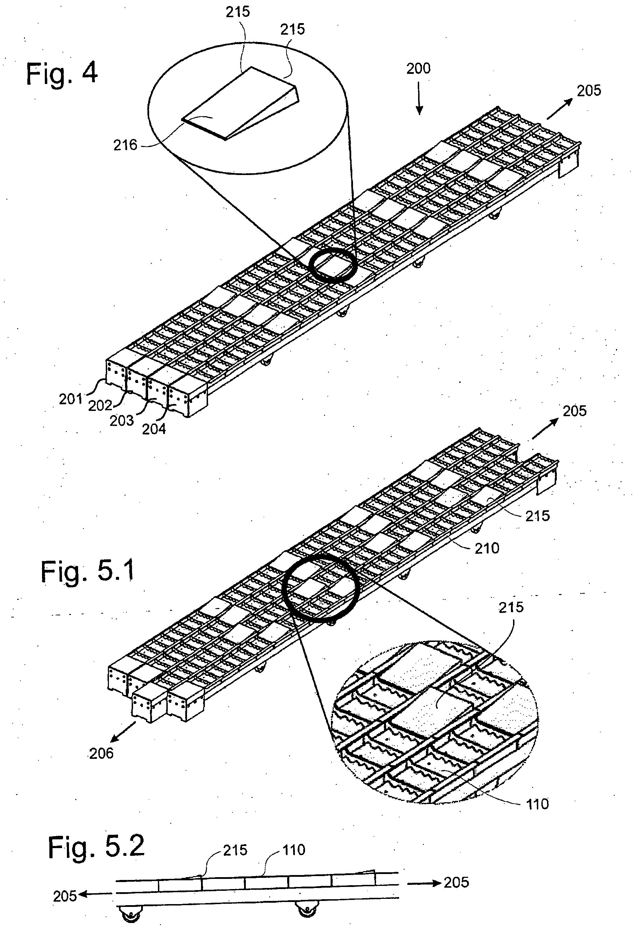

In Figur 4 ist eine Ausgestaltung des erfindungsgemäßen Kühlers als Kühler 200 dargstellt, welcher ebenfalls vier sich in Förderrichtung 205 erstreckende, nebeneinander liegende Planken 201, 202, 203 und 204 aufweist, wobei zur Vereinfachung hier die von unten durchdringende Kühlluft nicht eingezeichnet wurde. Im Unterschied zu dem Kühler nach Figur 1 sind in diesem Kühler die zweiten Oberflächen 215 keilförmig ausgestaltet und sind fest auf den Planken 201, 202, 203 und 204 angeordnet und bewegen sich nicht wie bei einem äußerlich ähnlich scheinenden Kühlertyp, bei dem die keilförmigen Schubelemente sich relativ zur Plankenoberfläche bewegen. Bei der hier gezeigten Anordnung weisen die nahezu senkrechte Flächen 216 in Förderrichtung 205 und die flachen Enden der Keile 217 weisen entgegen der Förderrichtung. Bei der gemeinsamen Vorwärtsbewegung kommt die Wirkunf der senkrechten Flächen 216 nicht zum Tragen, weil sich das gesamte Schüttgutbett auf dem Kühler 200 vorwärtsbewegt. Beim Zurückziehen einzelner Planken 201, 202, 203 oder 204, schieben sich die zweiten, keilförmigen Einsätze 215 unter dem Schüttgutbettstreifen, der über der sich gegen die Förderrichtung 205 bewegende Planke und hebt dabei den Schüttgutbettstreifen über sich an und das Schüttgutbett fällt über die nahezu senkrechte Kante 216, wobei sich das Schüttgutbett neu verdichtet und dabei auch eine vertikale Durchmischung erlebt. Im Gegensatz zu den Strömungshindernissen nach der DK 140399 wird hier das Bett behutsam von einem Keil mit geringem Reibschluss angehoben und umgewälzt, wobei sich zwischen den einzelnen Keilen keine Mulde bildet, die gefüllt ist mit einer über den Planken stationären Schüttgutbettschicht.

Die Anordnung der keilförmigen Einsätze 215 in dem ansonsten mit kassettenförmigen und mit einander überlappenden Profilelementen versehenen Einsätzen 110 belegten Kühler 200 ist in einer Detailvergrößerung in Abbildung 5.1 dargestellt, aus dem die Anordnung der nahezu senkrecht Seite hervorgeht, über die das Schüttgut beim Zurückziehen der einzelnen Planken 210, 202, 203 und 204 hervorgeht.

In Figur 5.2 ist schließlich eine Seitenansichtsskizze auf die Kühlertransportebene des Kühler 200 abgebildet, wobei die keilförmigen Einsätze 215 geringfügig über die Kühlertransportebene herausragen.

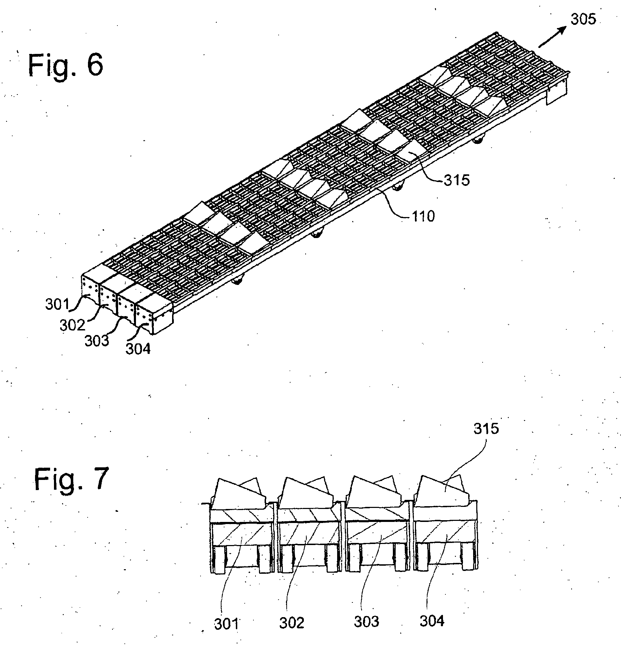

In Figur 6 ist schließlich eine dritte Ausgestaltung des Kühlers als Kühler 300 dargestellt, wobei auch hier gegenüber der Darstellung in Figur 1 zur Vereinfachung hier die von unten durchdringende Kühlluft nicht eingezeichnet wurde. Bei dieser Ausgestaltung werden die zweiten Einsätze 315, des ansonsten mit Kühler 100 und 200 identischen Kühlers als Keile ausgebildet, der zu einer Seite abfällt. Beim Zurückziehen einzelner Planken 301, 302, 303 oder 304 schiebt sich der zweite Einsatz 315 mit geringem Reibschluss im Vergleich zu den kassettenförmigen Einsätzen 110 unter das Schüttgutbett, das zur abfallenden Seite verdichtet wird und anschließend über die zur Förderrichtung weisende Kante des zweiten Einsatze 315 fällt. Beim Ziehen des zweiten Einsatzes 315 durch das Schüttgutbett entsteht eine schaufelpflugähnliche Wirkung wodurch das Schüttgut in einer Art Schraubenlinie in Förderrichtung bewegt wird und sich dabei vertikal deutlich durchmischt. Durch die Durchmischung werden stets solche Oberflächenanteile des schlecht wärmeleitenden Klinkers freigelegt, die noch Oberflächenwärme aufweisen. Dadurch kann diese Wärme rekuperiert werden und die Gesamteffizienz des Klinkerkühlers steigt.

Es ist möglich, die Rotationsbewegung des Klinkers in dem Schüttgutbettstreifen über jeweils einer Planke 301, 302, 303 und 304 zu wechseln, um so eine Nettoförderwirkung zur Seite zu verhindern, und es ist auch möglich, die Rotationsbewegung durch gleiche Ausrichtung der Keile zur Seite einheitlich zu belassen, um damit eine erwünschte Nettoförderung zur Seite zu erhalten.

Der Gedanke der Erfindung bezieht sich auf eine bewusste Störung des an sich bekannten Schubbodenförderers, um einerseits eine Fluidisierung des Schüttgutbettes vermeiden zu können, aber andererseits dennoch zu vermeiden, dass sich heiße, nicht fluidisierte Klinkergranalien im Windschatten von anderen befinden und daher ihre Wärme nicht abgeben können. Um dies zu erreichen, ist es möglich als Oberflächenteilstücke die ebenen, die keilförmigen Oberflächenteilstücke oder die keilförmigen Oberflächenteilstücke mit zur Seite abfallender Ausrichtung zu wählen und diese in verschiedenen Belegungsmustern in der Kühlertransportebene anzuordnen. Auf diese Weise werden die Vorteile einiger Kühlertypen, wie beispielsweise die Rekuperationseffizienz bewahrt und andererseits sind andere Nachteile, wie sich bewegende Elemente in der heißen Schüttgutbettschicht nicht vorhanden. Es werden dem Transportsystem inhärente Auflockerungen über der Grenzlinie zwischen den einzelnen Schüttgutbettstreifen, die besonders bei geringen Schüttgutbetthöhen entstehen, verschlossen oder deren Bildung wird unterdrückt.

### BEZUGSZEICHENLISTE

| | | | |
|---|---|---|---|
| 100 | Klinkerkühler | 204 | Planke |
| 101 | Planke | 205 | Förderrichtung |
| 102 | Planke | 215 | keilförmiger Einsatz mit geringem Reibschluss |
| 103 | Planke | | |
| 104 | Planke | 300 | Klinkerkühler |
| 105 | Förderrichtung | 301 | Planke |
| 107 | Kühlluft | 302 | Planke |
| 110 | Einsatz | 303 | Planke |
| 115 | Einsatz mit geringem Reibschluss | 304 | Planke |
| 200 | Klinkerkühler | 305 | Förderrichtung |
| 201 | Planke | 315 | keilförmiger Einsatz mit geringem Reibschluss mit zur Seite abfallender Planke |
| 202 | Planke | | |
| 203 | Planke | | |

## Patentansprüche

1. Kühler (100, 200, 300) zum Kühlen von heißem Schüttgut, □
a) in welchem Kühlgas (107) etwa quer zur Förderrichtung durch ein Schüttgutbett fließt und dabei die Wärme des Schüttguts aufnimmt,□wobei
b) eine das Schüttgutbett tragende Vorrichtung (101, 102, 103, 104) einen Belüftungsboden aufweist, durch den Kühlgas (107) fließt, undDwobei
c) das Förderprinzip sich in Förderrichtung (105) erstreckende Planken (101, 102, 103, 104) vorsieht, bei welchen
d) mindestens.zwei benachbarte Planken (101, 102, 103, 104) gleichzeitig in Förderrichtung (105) und ungleichzeitig entgegen der Förderrichtung (105) bewegt werden, □
**dadurch gekennzeichnet, dass□**
e) die Planken (101, 102, 103, 104) in Förderrichtung (105) verschieden ausgestaltete Oberflächen (110, 115, 215, 315) aufweisen, auf denen das Schüttgutbett liegt, welche
f) aufgrund ihres unterschiedlichen Reibschlusses mit dem darauf liegenden Schüttgutbett zu voneinander verschiedenen, mittleren Transportgeschwindigkeiten führen, so dass
f.1) dadurch das Schüttgutbett im Bereich der schnelleren Förderung gestreckt und im Bereich der langsameren Förderung gestaucht wird, **wobei**
**g) eine erste Ausgestaltung der Oberflächen (115) eben ist, und**
**h) eine zweite Ausgestaltung der Oberflächen ein Tragrost (110) ist, welcher einander überlappende Profile aufweist, zwischen denen Kühlgas (107) in das Schüttgutbett fließt.** □

2. Kühler nach Anspruch 1,
**dadurch gekennzeichnet, dass**
eine Ausgestaltung der Oberflächen eine Keilform (215) aufweist, deren flaches Ende (217) entgegen der Förderrichtung (205) ausgerichtet ist.

3. Kühler nach einem der Ansprüche 1 bis 2,
**dadurch gekennzeichnet, dass**
eine Ausgestaltung der Oberflächen eine Keilform (315) aufweist, welche zur Seite geneigt ist und deren flaches Ende entgegen der Förderrichtung (305) ausgerichtet ist.

4. Kühler nach einem der Ansprüche 1 bis 3,
**dadurch gekennzeichnet, dass**
sich die verschieden ausgestalteten Oberflächen (110, 115, 215, 315) in regelmäßigen Abständen längs der Förderrichtung (105) abwechseln.

5. Kühler nach einem der Ansprüche 1 bis 3,
**dadurch gekennzeichnet, dass**
die verschieden ausgestalteten Oberflächen ein (110, 115, 215, 315) schräg zur Förderrichtung (105) angeordnetes Muster ergeben.

6. Kühler nach einem der Ansprüche 1 bis 3,
**dadurch gekennzeichnet, dass**
die verschieden ausgestalteten Oberflächen (110, 115, 215, 315) ein Bogenmuster (3a) bilden, wobei die Bögen symmetrisch zur Förderrichtung (105) angeordnet sind.

7. Verfahren zum Kühlen von heißem Schüttgut,
in welchem das Schüttgut als Schüttgutbett über einen Belüftungsboden (110, 115, 215, 315) transportiert wird,
wobei etwa quer zur Förderrichtung (105) Kühlgas (107) durch das Schüttgutbett fließt, und
wobei das Förderprinzip sich in Förderrichtung (105) erstreckende Planken (101, 102, 103, 104) vorsieht, bei welchen mindestens zwei benachbarte Planken (101, 102, 103, 104) gleichzeitig in Förderrichtung (105) und ungleichzeitig entgegen der Förderrichtung (105) bewegt werden,
**dadurch gekennzeichnet, dass**
die Planken (101, 102, 103, 104) in Förderrichtung (105) verschieden ausgestaltete Oberflächen (110, 115, 215, 315) aufweisen, auf denen das Schüttgutbett liegt, welche aufgrund ihres unterschiedlichen Reibschlusses mit dem darauf liegenden Schüttgutbett zu voneinander verschiedenen, mittleren Transportgeschwindigkeiten führen, so dass dadurch das Schüttgutbett im Bereich der schnelleren Förderung gestreckt und im Bereich der langsameren Förderung gestaucht wird, wobei
**eine erste Ausgestaltung der Oberflächen (115) eben ist, und**
**eine zweite Ausgestaltung der Oberflächen ein Tragrost (110) ist, welcher einander überlappende Profile aufweist, zwischen denen Kühlgas (107) in das Schüttgutbett fließt.** □

8. Verfahren nach Anspruch 7,
**dadurch gekennzeichnet, dass**
eine Ausgestaltung der Oberflächen eine Keilform (315) aufweist, welche das Schüttgutbett bei der Bewegung einer Planke (101, 102, 103, 104) entgegen der Förderrichtung (105) so umwälzt, dass Schüttgut auf die sich in Förderrichtung (105) erstreckende Grenzlinie zwischen zwei Planken (101, 102, 103, 104) gefördert wird.

9. Verfahren nach einem der Ansprüche 7 bis 8,
**dadurch gekennzeichnet, dass**
die unterschiedlich ausgestalteten Oberflächen ein regelmäßiges Muster (3a, 3b, 3c, 3d) bilden.

## Claims

1. Cooler (100, 200, 300) for cooling hot bulk material,
a) in which cooling gas (107) flows approximately transversely to the conveying direction through a bulk material bed and in the process takes up the heat of the bulk material, wherein
b) an apparatus (101, 102, 103, 104) which carries the bulk material bed has a ventilation floor through which cooling gas (107) flows, and wherein
c) the conveying principle provides for planks (101, 102, 103, 104) which extend in the conveying direction (105), in which
d) at least two adjacent planks (101, 102, 103, 104) are moved simultaneously in the conveying direction (105) and non-simultaneously counter to the conveying direction (105),
**characterized in that**
e) the planks (101, 102, 103, 104) have differently configured surfaces (110, 115, 215, 315), on which the bulk material bed lies, in the conveying direction (105),
f) and these surfaces, on account of their different frictional locking with the bulk material bed lying thereon, lead to mean transport speeds which differ from one another, such that
f.1) as a result the bulk material bed is stretched in the region of quicker conveying and compressed in the region of slower conveying, wherein
g) a first configuration of the surfaces (115) is planar, and
h) a second configuration of the surfaces is a supporting grate (110), which has overlapping profiles between which cooling gas (107) flows into the bulk material bed.

2. Cooler according to Claim 1,
**characterized in that**
one configuration of the surfaces has a wedge form (215), the flat end (217) of which is oriented counter to the conveying direction (205).

3. Cooler according to either of Claims 1 and 2,
**characterized in that**
one configuration of the surfaces has a wedge form (315) which is inclined to the side and the flat end of which is oriented counter to the conveying direction (305).

4. Cooler according to one of Claims 1 to 3,
**characterized in that**
the differently configured surfaces (110, 115, 215, 315) alternate at regular intervals along the conveying direction (105).

5. Cooler according to one of Claims 1 to 3,
**characterized in that**
the differently configured surfaces (110, 115, 215, 315) give rise to a pattern arranged obliquely with respect to the conveying direction (105).

6. Cooler according to one of Claims 1 to 3,
**characterized in that**
the differently configured surfaces (110, 115, 215, 315) form an arch pattern (3a), the arches being arranged symmetrically with respect to the conveying direction (105).

7. Process for cooling hot bulk material,
in which the bulk material is transported as a bulk material bed via a ventilation floor (110, 115, 215, 315),
wherein cooling gas (107) flows approximately transversely to the conveying direction (105) through the bulk material bed, and
wherein the conveying principle provides for planks (101, 102, 103, 104) which extend in the conveying direction (105), in which at least two adjacent planks (101, 102, 103, 104) are moved simultaneously in the conveying direction (105) and non-simultaneously counter to the conveying direction (105),
**characterized in that**
the planks (101, 102, 103, 104) have differently configured surfaces (110, 115, 215, 315), on which the bulk material bed lies, in the conveying direction (105), and these surfaces, on account of their different frictional locking with the bulk material bed lying thereon, lead to mean transport speeds which differ from one another, such that as a result the bulk material bed is stretched in the region of quicker conveying and compressed in the region of slower conveying, wherein
a first configuration of the surfaces (115) is planar, and
a second configuration of the surfaces is a supporting grate (110), which has overlapping profiles between which cooling gas (107) flows into the bulk material bed.

8. Process according to Claim 7,
**characterized in that**
one configuration of the surfaces has a wedge form (315) which, when a plank (101, 102, 103, 104) is moved counter to the conveying direction (105), circulates the bulk material bed such that bulk material is conveyed onto the borderline extending in the conveying direction (105) between two planks (101, 102, 103, 104).

9. Process according to either of Claims 7 and 8,
**characterized in that**
the differently configured surfaces form a regular pattern (3a, 3b, 3c, 3d).

## Revendications

1. Refroidisseur (100, 200, 300) pour refroidir un produit en vrac chaud,
a) dans lequel du gaz de refroidissement (107) s'écoule approximativement transversalement à la direction de transport à travers un lit de produit en vrac et reçoit la chaleur du produit en vrac,
b) un dispositif (101, 102, 103, 104) supportant le lit de produit en vrac comprenant un fond de ventilation à travers lequel s'écoule le gaz de refroidissement (107), et
c) le principe de transport prévoyant des planches (101, 102, 103, 104) s'étendant dans la direction de transport (105), parmi lesquelles
d) au moins deux planches adjacentes (101, 102, 103, 104) sont déplacées simultanément dans la direction de transport (105) et de manière non simultanée en sens inverse à la direction de transport (105),
**caractérisé en ce que**
e) les planches (101, 102, 103, 104) comprennent des surfaces (110, 115, 215, 315) configurées différemment dans la direction de transport (105), sur lesquelles repose le lit de produit en vrac, lesquelles
f) mènent à des vitesses moyennes de transport différentes les unes des autres en raison de leur engagement par friction différent avec le lit de produit en vrac reposant sur celles-ci, de telle sorte que
f.1) le lit de produit en vrac soit ainsi étiré dans la région du transport plus rapide et comprimé dans la région du transport plus lent,
g) une première configuration des surfaces (115) étant plane, et
h) une deuxième configuration des surfaces étant une grille de support (110), laquelle comprend des profilés se chevauchant, entre lesquels du gaz de refroidissement (107) s'écoule dans le lit de produit en vrac.

2. Refroidisseur selon la revendication 1,
**caractérisé en ce que**
une configuration des surfaces comprend une forme en coin (215) dont l'extrémité plate (217) est orientée en sens inverse à la direction de transport (205).

3. Refroidisseur selon l'une quelconque des revendications 1 à 2,
**caractérisé en ce que**
une configuration des surfaces comprend une forme en coin (315), laquelle est inclinée vers le côté et dont une extrémité plate est orientée en sens inverse à la direction de transport (305).

4. Refroidisseur selon l'une quelconque des revendications 1 à 3,
**caractérisé en ce que**
les surfaces (110, 115, 215, 315) configurées différemment alternent à intervalles réguliers le long de la direction de transport (105).

5. Refroidisseur selon l'une quelconque des revendications 1 à 3,
**caractérisé en ce que**
les surfaces (110, 115, 215, 315) configurées différemment produisent un motif disposé de manière oblique par rapport à la direction de transport (105).

6. Refroidisseur selon l'une quelconque des revendications 1 à 3,
**caractérisé en ce que**
les surfaces (110, 115, 215, 315) configurées différemment forment un motif arqué (3a), les arcs étant disposés symétriquement par rapport à la direction de transport (105).

7. Procédé pour refroidir un produit en vrac chaud,
dans lequel le produit en vrac est transporté sous forme de lit de produit en vrac par le biais d'un fond de ventilation (110, 115, 215, 315),
du gaz de refroidissement (107) s'écoulant approximativement transversalement à la direction de transport (105) à travers le lit de produit en vrac, et le principe de transport prévoyant des planches (101, 102, 103, 104) s'étendant dans la direction de transport (105), parmi lesquelles au moins deux planches adjacentes (101, 102, 103, 104) sont déplacées simultanément dans la direction de transport (105) et de manière non simultanée en sens inverse à la direction de transport (105),
**caractérisé en ce que**
les planches (101, 102, 103, 104) comprennent des surfaces (110, 115, 215, 315) configurées différemment dans la direction de transport (105), sur lesquelles repose le lit de produit en vrac, lesquelles mènent à des vitesses moyennes de transport différentes les unes des autres en raison de leur engagement par friction différent avec le lit de produit en vrac reposant sur celles-ci, de telle sorte que le lit de produit en vrac soit ainsi étiré dans la région du transport plus rapide et comprimé dans la région du transport plus lent,
une première configuration des surfaces (115) étant plane, et
une deuxième configuration des surfaces étant une grille de support (110), laquelle comprend des profilés se chevauchant, entre lesquels du gaz de refroidissement (107) s'écoule dans le lit de produit en vrac.

8. Procédé selon la revendication 7,
**caractérisé en ce que**
une configuration des surfaces comprend une forme en coin (315), laquelle fait circuler le lit de produit en vrac lors d'un déplacement d'une planche (101, 102, 103, 104) en sens inverse à la direction de transport (105), de telle sorte que le produit en vrac soit transporté sur la ligne de séparation entre deux planches (101, 102, 103, 104) s'étendant dans la direction de transport (105).

9. Procédé selon la revendication 7 ou 8,
**caractérisé en ce que**
les surfaces configurées différemment forment un motif régulier (3a, 3b, 3c, 3d).
